(19) **Europäisches Patentamt**

**European Patent Office**

**Office européen des brevets**

(11) **EP 1 532 756 B1**

(12) **EUROPÄISCHE PATENTSCHRIFT**

(45) Veröffentlichungstag und Bekanntmachung des Hinweises auf die Patenterteilung:
**11.10.2006 Patentblatt 2006/41**

(21) Anmeldenummer: **03790700.3**

(22) Anmeldetag: **08.08.2003**

(51) Int Cl.:
**H04B 10/08** $^{(2006.01)}$

(86) Internationale Anmeldenummer:
**PCT/DE2003/002671**

(87) Internationale Veröffentlichungsnummer:
**WO 2004/021610 (11.03.2004 Gazette 2004/11)**

(54) **VERFAHREN ZUR ERMITTLUNG DER SIGNAL-RAUSCHABSTÄNDE EINES OPTISCHEN SIGNALS**

METHOD FOR DETERMINING THE SIGNAL-TO-NOISE RATIO FOR AN OPTICAL SIGNAL

PROCEDE POUR DETERMINER LE RAPPORT SIGNAL-BRUIT D'UN SIGNAL OPTIQUE

(84) Benannte Vertragsstaaten:
**DE ES FR GB IT**

(30) Priorität: **27.08.2002 DE 10239305**

(43) Veröffentlichungstag der Anmeldung:
**25.05.2005 Patentblatt 2005/21**

(73) Patentinhaber: **SIEMENS AKTIENGESELLSCHAFT**
**80333 München (DE)**

(72) Erfinder:
• **MARTIN, Jürgen**
**85653 Aying (DE)**
• **RAPP, Lutz**
**82041 Deisenhofen (DE)**

(56) Entgegenhaltungen:
**DE-A- 10 049 769      US-A- 4 923 290**
**US-A- 5 677 781      US-A- 5 917 649**

EP 1 532 756 B1

**Beschreibung**

Die Erfindung betrifft ein Verfahren und eine Vorrichtung zur Ermittlung des Signal-Rausch-Verhältnisses (OSNR) eines optischen Signals nach den Oberbegriffen der Patentansprüche 1 und 9.

Die mit Hilfe von Wellenlängen-Multiplex(-WDM)-Übertragungssystemen überbrückbare Übertragungsreichweite eines WDM-Signals mit mehreren Kanälen wird unter anderem durch die in optischen Verstärkern entstehende verstärkte spontane Emission ASE, "amplified spontaneous emission", als Rauschleistung begrenzt, die sich den optischen Signalen bei den Kanälen überlagert. Zur optimalen Einregelung der Übertragungseigenschaften muss diese Rauschleistung gemessen werden.

Üblicherweise wird die in einem gewissen Wellenlängenabstand zu einem Kanal auftretende Rauschleistung ASE bei kleineren und größeren Wellenlängen gemessen und die dem Kanal überlagerte Rauschleistung ASE durch Interpolation berechnet. Infolge der starken Zunahme der Anzahl an Wellenlängenkanälen und der damit einhergehenden Abnahme des Kanalabstands kann dieses Verfahren nicht mehr eingesetzt werden. Auch die in modernen Übertragungssystemen innerhalb der Strecke eingesetzten Komponenten zur Beeinflussung des Spektrums und zum Ein- bzw. Auskoppeln von Signalen verbieten den Einsatz dieses Verfahrens. In solchen Übertragungssystemen sollte deshalb ein Verfahren zum Einsatz kommen, das direkt die Messung der den Kanälen überlagerten Rauschleistung ASE zulässt.

Als Abhilfe wurde ein als "Polarization Nulling" bezeichnetes Verfahren vorgeschlagen, das davon Gebrauch macht, dass der aus der Rauschkomponente ASE resultierende Signalanteil nicht polarisiert ist. Der wesentliche Nachteil aller bisher bekannten Realisierungsvorschläge dieses Verfahrens ist jedoch, dass durch spektrale Filterung jeder Kanal einzeln selektiert und mit Hilfe eines Polarisationsstellers ein definierter Polarisationszustand zur optimalen Unterdrückung des polarisierten Signalanteils eingestellt werden muss. Dadurch wird dieses Verfahren sehr aufwendig und führt zu langen Messzeiten. Die beiden folgenden Schriften beschreiben die Grundlagen der Methode: "OSNR Monitoring Technique Based on Polarisation Nulling Method", J.H. Lee, D.K. Jung, C.H. Kim, Y.C. Chung, IEEE Photonics Technology Letters, Vol. 13, No.1, January 2001; "Improved OSNR Monitoring Technique Based on Polarisation Nulling Method", J.H. Lee, Y.C. Chung, Electronics Letters, 19th July 2001, Vol. 37, No. 15.

In DE 10049769 A1 sind ebenfalls eine Vorrichtung und ein Verfahren zum Messen des optischen Signal-Rausch-Verhältnisses (OSNR) angegeben, wobei ausgenutzt wird, dass der Signalanteil im Gegensatz zum Rauschanteil linear polarisiert ist. Hinter einem variablen optischen Bandpassfilter (VOPBF) wird das zuvor verstärkte Eingangssignal in vier Teilkomponenten aufgeteilt und die Stokesschen Parameter werden bestimmt. Eine Recheneinrichtung berechnet sowohl die Leistung des polarisierten Eingangssignals, als auch die Rauschleistung. Zueinander ins Verhältnis gesetzt wird die OSNR bestimmt. Die Vorrichtung misst die OSNR für den gesamten Spektralbereich, indem die Durchlasswellenlänge des VOPBF, angefangen bei den kleineren Wellenlängen, sequenziell verändert wird und aus den gemessenen Leistungswerten der Spitzenwert für die Signalleistung bestimmt wird. Auch bei diesem Verfahren ist der gerätetechnische Aufwand durch die notwendige Rechen- und Auswerteeinheit in Verbindung mit der Filtereinheit hoch.

In "Optical Signal-To-Noise Ratio Measurement In WDM Networks Using Polarization Extinction", M. Rasztovits-Wiech et al., ECOC 98, 20-24 Sept., Madrid, p. 549-550 wird eine Anordnung zur Messung der Signal-Rauschabstände vorgestellt, bei der ein WDM-Signal in einen Polarisationssteller, weiterhin in einen linearen Polarisator und anschließend in einen optischen Spektrumanalysator oder in ein Leistungsmessmodul mit vorgeschaltetem abstimmbaren optischen Filter eingespeist wird. Das abstimmbare Filter wird so eingestellt, dass die Leistung eines einzelnen Kanals vollständig transmittiert wird und der restliche Anteil des WDM Spektrums unterdrückt wird. Der Polarisationssteller wird so lange verstellt, bis das Leistungsmessgerät ein minimales Signal anzeigt. Danach wird der Polarisator in die dazu orthogonale Position gebracht, so dass das Leistungsmessmodul einen maximalen Wert anzeigt. Aus der Differenz zwischen maximalem Signal und dem um 3dB erhöhten minimalen Signal ergibt sich der Signal-Rauschabstand OSNR bezogen auf die Bandbreite des abstimmbaren Filters. Ein Nachteil dieser Methode ist der hohe Zeitaufwand bei einer Messung für sehr viele WDM-Kanäle, da alle Kanäle sequenziell unabhängig wie oben beschrieben vermessen werden müssen.

Ein weiteres Verfahren besteht darin, mit Hilfe eines Polarisation-Verwürflers, "Polarization-Scramblers", sämtliche Polarisationszustände auf der Poincare-Kugel abzufahren und für jeden eingestellten Polarisationszustand ein zugehöriges Spektrum mit Hilfe eines optischen Spektrumanalysators aufzunehmen. Die aus der Analyse aller aufgenommenen Spektren ermittelte minimale und maximale Leistung wird dann zur Berechnung des Signal-Rauschabstands OSNR verwendet. Die minimale Leistung tritt genau dann auf, wenn das Signal vollständig durch den Polarisator unterdrückt wird, während im Falle der maximalen Leistung die Signalleistung zuzüglich der Rauschleistung ASE gemessen wird.

In US 2001/0052981 A1 ist eine Methode zur Messung des Signal-Rausch-Verhältnisses eines optischen Signals angegeben, die ein Standard-Vorgehen von "Polarisation-Nulling" darstellt. Dabei werden als Stellgrößen die Drehwinkel zwischen einer Lambda/4-Platte und einem Polarisator mittels einer Regelung eingestellt. Ein wesentlicher Nachteil ist, dass zunächst ein bestimmter Polarisationszustand am Eingang des Polarisators eingestellt werden muss. Nachdem der Polarisator verstellt wird, werden aus den Messergebnissen das Minimum und das Maximum des optischen Signals ermittelt. Da zur Messung der Signal-Rauschabstände bzw. zur Erzielung eines bzw. zweier gewünschten Polarisationszustände eine Regelung für eine 360°-Drehung des Polarisators erforderlich ist, weist diese Methode eine nachteilige Redundanz von Messungen auf, die mit Zeitaufwand verbunden ist.

In der Praxis ist es natürlich nicht möglich, sämtliche Polarisationszustände abzufahren. Je nach Zahl der gewählten Zustände und der Geschwindigkeit, mit der sich der Polarisationszustand eines Kanals im Übertragungssystem verändert, verbleibt ein mehr oder weniger großer Messfehler.

Aufgabe der Erfindung ist es, ein Verfahren und eine Vorrichtung anzugeben, mit denen die Signal-Rausch-Abstände der Signale eines optischen Signals auf der Basis des "Polarization Nulling" mit minimalem Aufwand und möglichst schnell ermittelt werden. Besondere Vorteile sollte das Verfahren bei der Analyse von optischen Wellenlängen-Multiplex-(WDM) Signalen bieten.

Eine Lösung der Aufgabe erfolgt hinsichtlich ihres Verfahrensaspekts durch ein Verfahren mit den Merkmalen des Patentanspruchs 1 und hinsichtlich ihres Vorrichtungsaspekts durch eine Vorrichtung mit den Merkmalen des Patentanspruchs 8.

Ausgehend von einem Verfahren zur Ermittlung des optischen Signal-Rauschabstands OSNR eines optischen Signals mit einem ersten Polarisationszustand, der mittels einer Mehrzahl von Einstellungen eines Polarisationsstellers in einen zweiten Polarisationszustand umgewandelt wird, bei dem definierte Änderungen des zweiten Polarisationszustandes durch den Polarisationssteller auf der Poincaré-Kugel eingestellt werden, bei denen Amplitudenwerte des optischen Signals ermittelt werden, werden erfindungsgemäß die ermittelten Amplitudenwerte des optischen Signals gespeichert. Der Signal-Rauschabstand OSNR des oder eines weiteren optischen Signals wird aus einem berechneten Wert der gespeicherten Amplitudenwerte ermittelt.

Aufgrund einer begrenzten Anzahl von gespeicherten Amplitudenwerten werden erfindungsgemäß die Signal-Rauschabstände OSNR eines oder mehrerer Kanäle mittels einer Interpolation hergeleitet. Dies wird durch die Ermittlung des berechneten Wertes als interpolierter Hub der quadrierten gespeicherten Amplitudenwerte erreicht.

Ein wesentlicher Vorteil des erfindungsgemäßen Verfahrens ist darin zu sehen, dass anstelle diskreter, kanalindividueller, feiner und langsamer Einstellungen oder Regelungen des Polarisationsstellers nur einige Voreinstellungen zur Ermittlung von zu speichernden Amplitudenwerten bei definierten Polarisationszuständen notwendig sind. Daher ist das Verfahren bei der Ermittlung weiterer Signal-Rauschabstände OSNR sehr schnell.

Ein weiterer Vorteil der Erfindung besteht darin, dass es nicht erforderlich ist, gezielt einen bestimmten Polarisationszustand.einzustellen, so daß keine aufwendige Regelung erforderlich ist.

Da Messungen bei beliebigen Polarisationszuständen durchgeführt werden, können bei einer gegebenen Einstellung der beiden Platten gleichzeitig mehrere Messpunkte für alle Kanäle gewonnen werden, indem das gesamte WDM-Spektrum, das alle Kanäle umfasst, aufgenommen wird. Dadurch wird die Messzeit unabhängig von der Anzahl der Kanäle. Vorteilhafte Weiterbildungen der Erfindung sind in den Unteransprüchen angegeben.

Ein Ausführungsbeispiel der Erfindung wird im Folgenden anhand der Zeichnung näher erläutert.

Dabei zeigt:

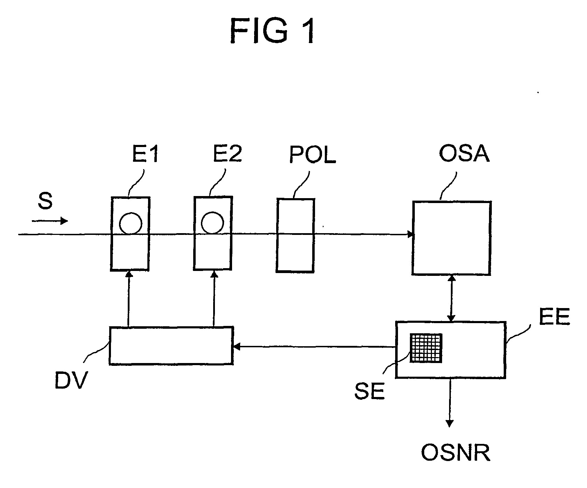

Fig. 1:    eine Vorrichtung zur Durchführung des erfindungsgemäßen Verfahrens.

Zur einfacheren Darstellung des erfindungsgemäßen Verfahrens wird eine Vorrichtung gemäß Fig. 1 so gewählt, dass ein WDM-Signal S zunächst einem Polarisationssteller PS, bestehend aus einer $\lambda/4$-Platte E1 und einer $\lambda/2$-Platte E2 als Phasenverzögerungsplatten, zugeführt wird. Dem Polarisationsteller PS ist ein Polarisator POL nachgeschaltet. Für verschiedene Einstellungen des Polarisators bzw. des aus dem Polarisationsstellers durchgelassenen Polarisationszustandes wird nun mittels eines optischen Spektrumanalysators OSA jeweils die spektrale Leistungsdichte am Ausgang dieser Vorrichtung aufgezeichnet. Dem optischen Spektrumanalysator OSA kann ein Wellenlängen-Demultiplexer oder ein wellenlängen-selektives Filter vorgeschaltet werden, so dass gewählte Kanäle oder nur ein Kanal des WDM-Signals aufgenommen werden/wird. Eine Demultiplexierung ist jedoch in der Praxis nicht notwendig. Dem optischen Spektrumanalysator OSA ist eine Ermittlungseinheit EE des Signal-Rauschabstandes OSNR zugeschaltet, bei der eine Interpolation und eine Hubsuche der am optischen Spektrumanalysator OSA aufgenommenen Amplitudenwerten zur erfindungsgemäßen Ermittlung des gemessenen Signal-Rauschabstandes OSNR durchgeführt werden. Die Ermittlungseinheit EE steuert eine Drehvorrichtung DV der Platten E1, E2. Dem optischen Spektrumanalysator OSA oder der Ermittlungseinheit EE ist eine Speichereinheit SE zur Tabellierung von den am optischen Spektrumanalysator OSA gemessenen Amplitudenwerten des Signals bei unterschiedlichen Stellungen der Phasenverzögerungsplatte E1, E2 angeschlossen.

Mathematisch lässt sich ein elektrischer Feldvektor $\vec{E}$ einer ebenen Welle mit Frequenz $\omega$ und Wellenzahl k, die sich in einem orthogonalen Koordinatensystem mit x- ,y- und z-Achsen in z-Richtung bewegt, durch den Ausdruck:

$$\vec{E} \;=\; \begin{pmatrix} E_x e^{i\varphi_x} \\ E_y e^{i\varphi_y} \end{pmatrix} e^{i(\omega t - kz)}$$

beschreiben. Dabei bezeichnen $E_x$, $\varphi_x$ und $E_y$, $\varphi_y$ die Amplitude und Phase der Komponenten des elektrischen Feldvektors $\vec{E}$ in x- bzw. y-Richtung. Durch Normierung mit

$$E \;=\; \sqrt{E_x^2 \;+\; E_y^2}$$

entsteht der sogenannte Jones-Vektor $\vec{J}$:

$$\vec{J} \;=\; \frac{1}{E} \begin{pmatrix} E_x e^{i\varphi_x} \\ E_y e^{i\varphi_y} \end{pmatrix},$$

der den Polarisationszustand der Welle beschreibt.

Für den Polarisationszustand ist nur die Differenz $\Delta\varphi = \varphi_y - \varphi_x$ von Bedeutung, so dass die Phase einer Komponente zu Null gesetzt werden darf. Mit $\varphi_x = 0$ erhält man:

$$\vec{J} \;=\; \frac{1}{E} \begin{pmatrix} E_x \\ E_y e^{i\Delta\varphi} \end{pmatrix}.$$

Der Einfluss von optischen Komponenten auf die Polarisation einer ebenen Welle lässt sich durch Jones-Matrizen beschreiben, die die Jones-Vektoren in Form einer linearen Abbildung transformieren. Matrixdarstellungen sind immer mit der Wahl einer speziellen Basis verknüpft. Das bedeutet, dass mit Angabe einer Matrix die Lage der Koordinatenachsen fixiert wird. In diesem Ausführungsbeispiel erfährt die x-Komponente der dem linearen Polarisator POL eingehenden Welle eine maximale Transmission und die y-Komponente dieser Welle wird vollständig unterdrückt.
Die Jones-Matrix der $\lambda/4$-Platte, deren schnelle Achse mit der x-Achse den Winkel $\delta$ bildet, lässt sich wie folgt darstellen:

$$M_{\lambda/4} \;=\; \frac{1}{\sqrt{2}} \begin{pmatrix} 1 + i \cdot \cos 2\delta & i \cdot \sin 2\delta \\ \sin 2\delta & 1 - i \cdot \cos 2\delta \end{pmatrix}.$$

Die Jones-Matrix der $\lambda/2$-Platte lautet:

$$M_{\lambda/2} \;=\; i \begin{pmatrix} \cos 2\theta & \sin 2\theta \\ \sin 2\theta & -\cos 2\theta \end{pmatrix},$$

wobei $\theta$ den Winkel zwischen der schnellen Achse dieser Platte mit der x-Achse bezeichnet.
Im Folgenden soll die in Figur 1 abgebildete Vorrichtung mit Hilfe dieser Theorie betrachtet werden. Die Anordnung aus der $\lambda/4$-Platte und der $\lambda/2$-Platte wird durch die folgende Matrix beschrieben, wobei die Elemente in der zweiten Zeile mit Absicht nicht dargestellt sind, da sie nur die vom Polarisator POL unterdrückte y-Komponente des elektrischen Feldes $\vec{E}$ beeinflussen:

$$M = M_{\lambda/2} \cdot M_{\lambda/4} = \frac{i}{\sqrt{2}} \begin{pmatrix} \cos 2\theta + i \cdot \cos(2\theta - 2\delta) & \sin 2\theta - i \cdot \sin(2\theta - 2\delta) \\ \ldots & \ldots \end{pmatrix}$$

Für die am optischen Spektrumanalysator OSA gemessene Signalleistung $I = \left|\vec{E}\right|^2$ und damit $I = \left|M \cdot \vec{J}\right|^2$ gilt:

$$I = \frac{1}{2}\left[E_x^2 \cdot \left(\cos^2 2\theta + \cos^2(2\theta - 2\delta)\right) + E_y^2 \cdot \left(\sin^2 2\theta + \sin^2(2\theta - 2\delta)\right)\right.$$
$$\left. + 2E_x E_y \cdot \cos \Delta\varphi \cdot \left(\sin 2\theta \cdot \cos 2\theta - \sin(2\theta - 2\delta) \cdot \cos(2\theta - 2\delta)\right)\right]$$

wobei $\Delta\varphi = \varphi_y - \varphi_x$, wie oben definiert.

In normierter Form ergibt sich daraus:

$$\frac{I}{E_x^2 + E_y^2} = \frac{1}{2} +$$
$$\cos(4\theta - 2\delta) \cdot \left[(q^2 - 1/2) \cdot \cos 2\delta + q \cdot \sqrt{1 - q^2} \cdot \cos \Delta\varphi \cdot \cos 2\delta\right]$$
$$+ \sin(4\theta - 2\delta) \cdot q \cdot \sqrt{1 - q^2} \cdot \sin \Delta\varphi$$

wobei q die Verteilung der Gesamtleistung auf die beiden Komponenten $E_x$, $E_y$ am Eingang der Messeinrichtung gemäß den folgenden Gleichungen bezeichnet:

$$E_x = \frac{q}{\sqrt{E_x^2 + E_y^2}}$$

und

$$E_y = \frac{\sqrt{1 - q^2}}{\sqrt{E_x^2 + E_y^2}} \cdot e^{i\Delta\varphi}$$

Aus dieser Darstellung wird ersichtlich, dass die Anhängigkeit der Intensität I von dem Winkel $\theta$ durch eine sinusförmige Funktion $\sin(4\theta - 2\delta + \rho)$ beschrieben werden kann ($\rho$ stellt eine Phase dar, die allerdings im Zusammenhang dieser Erfindung nicht von Belang ist).
Das Quadrat $A^2$ des Hubes dieser sinusförmigen Kurve - d. h. die doppelte Amplitude - berechnet sich zu:

$$A^2 = 4 \cdot \left[\left\{(q^2 - 1/2) \cdot \cos 2\delta + q \cdot \sqrt{1 - q^2} \cdot \cos \Delta\varphi \cdot \cos 2\delta\right\}^2\right.$$
$$\left. + \left\{q \cdot \sqrt{1 - q^2} \cdot \sin \Delta\varphi\right\}^2\right]$$

oder

$$A^2 = 4 \cdot \left[ \frac{1}{2} \left\{ (q^2 - 1/2)^2 + q^2 \cdot \left(1 - q^2\right) \cdot \left(1 + \sin^2 \Delta\varphi\right) \right\} \right.$$
$$+ \frac{1}{2} \left\{ (q^2 - 1/2)^2 - q^2 \cdot \left(1 - q^2\right) \cdot \cos^2 \Delta\varphi \right\} \cdot \cos 4\delta$$
$$\left. + (q^2 - 1/2) \cdot q \cdot \sqrt{1 - q^2} \cdot \cos \Delta\varphi \cdot \sin 4\delta \right]$$

Diese Größe zeigt wiederum eine sinusförmige Abhängigkeit vom Winkel $\delta$. Für das dargestellte Verfahren ist von Bedeutung, dass das Maximum dieser Größe - unabhängig von q und $\Delta\varphi$ - immer 1 beträgt und damit die Signalleistung angibt.

Zusammengefasst basiert die Erfindung auf der Erkenntnis, dass sich die durch den Polarisator POL transmittierte und gemessene Leistung I als einfache trigonometrische Funktion in Abhängigkeit von den beiden Stellwinkeln $\theta$ und $\delta$ der $\lambda$/2-Platte, bzw. $\lambda$/4-Platte beschreiben lässt.

Die gemessene Leistung I am optischen Spektrumanalysator OSA wird für einige definierte Einstellungen der Platten E1 und E2 z. B. in einer zwei-dimensionalen Tabelle in Abhängigkeit von den Stellgrößen $\delta$ und $\theta$ gespeichert. Im Folgenden werden die einzelnen Verfahrensschritte im Detail beschrieben. Zur einfacheren Darstellung wird das Verfahren zunächst für einen einzigen Kanal behandelt. Danach wird erläutert, wie der Signal-Rauschabstand OSNR sämtlicher Kanäle z. B. in einem WDM-System gleichzeitig bestimmt werden kann. Diese Methode eignet sich vorzugsweise für beliebige optische Multiplex-Signale vor der Demultiplexierung.

1) Bei einer festen Einstellung der $\lambda$/4-Platte E1 z. B. bei einem Winkel $\delta1$ wird die Leistung des Kanals nach dem Polarisator POL für n (n = 1, 2, ... N) verschiedene Einstellungen d.h. für n Winkel $\theta1, \theta2, ..., \theta N$ der $\lambda$/2-Platte E2 als Satz oder Spektrum $S_{\delta1}$ von Leistungswerten aufgenommen .

2) Für jede beliebig fest gewählte Stellung der $\lambda$/4-Platte E1 bei weiteren Winkeln $\delta2, ..., \delta M$ (m = 2,... (M-1)) und zeitlich konstanter Polarisation der einfallenden Lichtwelle, gilt die sinusförmige Abhängigkeit zwischen der gemessenen Leistung I nach dem Polarisator POL und dem Winkel $\theta$ der schnellen Achse der $\lambda$/2-Platte E2 zum Polarisator POL. Das Maximum sowie das Minimum dieser Kurve sind abhängig von der Stellung der $\lambda$/4-Platte E1 und werden im Folgenden als $I_{max}$ bzw. $I_{min}$ bezeichnet.

3) Die Leistungen $I_{max}$ und $I_{min}$ werden aus den Messungen für mehrere Stellungen der $\lambda$/2-Platte E2 durch einen geeigneten Kurvenfit an die Sinuskurve ermittelt und gespeichert. Ein von den Leistungen $I_{max}$ und $I_{min}$ entsprechender Hub $A_1$ wird dabei auch gespeichert.

4) Die Schritte (1) bis (3) werden im folgenden für verschiedene Stellungen der $\lambda$/4-Platte E1 (Anzahl m, m>1) wiederholt. Es werden damit M Werte für $I_{max}$ und $I_{min}$ ermittelt und gespeichert. Weitere von den Leistungen $I_{max}$ und $I_{min}$ entsprechenden Hübe $A_2, A_3, ..., A_M$ werden dabei auch gespeichert.

5) Trägt man nun für die m Stellungen der $\lambda$/4-Platte das Quadrat der Differenz $I_{max}$ - $I_{min}$ über dem Winkel $\delta$ auf, so kann der maximale Wert für $(I_{max} - I_{min})^2$ durch einen geeigneten Fit an die sinusförmige Kurve ermittelt werden.

6) Das dabei auftretende Maximum entspricht der Signalleistung. Da die Summe aus Signalleistung und Rauschleistung durch eine Leistungsmessung am Eingang der Vorrichtung bekannt ist, kann durch Subtraktion die Rauschleistung und somit auch das Signal-Rauschverhältnis OSNR bestimmt werden.

Das Vorgehen für ein WDM-Signal, das aus einer Vielzahl optischer Signale verschiedener Wellenlänge zusammengesetzt ist, liegt nun auf der Hand. Anstelle der Leistung nur eines Kanals wird für jede Kombination der Stellungen der beiden doppelbrechenden Platten E1, E2 ein Leistungsspektrum LS aufgenommen, so dass jeweils die Leistungen aller Kanäle nach dem Polarisator POL ermittelt werden. Die Auswertung durch Interpolation der sinusförmigen Kurven kann nun wie zuvor für jeden Kanal separat erfolgen.

**Patentansprüche**

**1.** Verfahren zur Ermittlung des Signal-Rausch-Verhältnisses (OSNR) von beliebig polarisierten optischen Signalen (S) unterschiedlicher Wellenlänge, die zu einem WDM-Signal zusammengefasst sind,
nach einem "Polarisation-Nulling-Verfahren",
wobei Leistungsspektren des WDM-Signals
für eine erste festgelegte Einstellung eines ersten polarisationsoptischen Phasenstellers (E1) und für N Einstellungen eines zweiten polarisationsoptischen Phasenstellers (E2) aufgenommen und gespeichert werden,
dass aus den Leistungsspektren für die optischen Signale (S) ein maximaler Hub $A_1$ ermittelt und gespeichert wird,
**dadurch gekennzeichnet, dass** anschließend die Leistungsspektren des WDM-Signals für M-1 Neueinstellungen des ersten Phasenstellers (E1) und für jeweils N Einstellungen des zweiten Phasenstellers (E2) aufgenommen und gespeichert werden,
dass aus diesen gespeicherten Leistungsspektren für jede Einstellung des ersten Phasenstellers (E1) die maximalen Hübe $A_m$ mit m = 2,3,...,M der Signale ermittelt und gespeichert werden, und
dass anhand aller Hübe $A_1$, $A_2$, ... $A_M$ für die optischen Signale (S) das Signal-Rausch-Verhältnis (OSNR) berechnet wird.

2. Verfahren nach Anspruch 1,
**dadurch gekennzeichnet,**
**dass** der Hub $A_m$ mit m=1,2,..., M eines optischen Signals (S) mittels einer Interpolation ermittelt wird.

3. Verfahren nach Anspruch 1 oder 2,
**dadurch gekennzeichnet,**
**dass** mittels Interpolation der quadrierten Hübe die Signalleistung des optischen Signals (S) ermittelt wird.

4. Verfahren nach Anspruch 1, 2 oder 3,
**dadurch gekennzeichnet,**
**dass** mittels einer Leistungsmessung am Eingang der Polarisationssteller eine Summe der Signal- und Rauschleistung ermittelt wird, aus der eine Rauschleistung durch Subtraktion von der ermittelten Signalleistung des optischen Signals (S) ermittelt wird.

5. Verfahren nach einem der vorangehenden Ansprüche,
**dadurch gekennzeichnet,**
**dass** die Phasenverschiebungen zwischen den Komponenten des elektrischen Feldvektors eines optischen Signals (S) und dem Polarisator (POL) mittels Phasenverzögerungsplatten als polarisationsoptische Phasensteller vorgenommen werden, und die Phasenverzögerungsplatte (E1) mit den Drehwinkeln δ1, δ2, ... δM einstellbar ist und die Phasenverzögerungsplatte (E2) mit den Drehwinkeln θ1, θ2, ..., θN einstellbar ist.

6. Verfahren nach Anspruch 5,
**dadurch gekennzeichnet,**
**dass** die Einstellungen der ersten und zweiten Phasenverzögerungsplatten (E1) und (E2) so erfolgen,
**dass** eine erste Phasenverschiebung für einen ersten Drehwinkel δ1 von (E1) eingestellt wird und eine Vielzahl N von Winkeln θ1, θ2, ... θN für (E2) eingestellt wird, aus denen ein Satz von N Leistungswerten aufgenommen wird,
**dass** aus diesen Leistungswerten eine erste sinusförmige Interpolationskurve ermittelt wird, deren Hub $A_1$ in einer Tabelle gespeichert wird,
**dass** die Einstellungen der Winkel θ1, θ2, ... θN bei weiteren Drehwinkeln δ2, ..., δM mit m>1 zur Aufnahme von weiteren Leistungswerten wiederholt werden, aus denen weitere Hübe $A_2$, ... $A_M$ gespeichert werden, deren Werte quadriert und mit einer weiteren sinusförmigen Kurve in Abhängigkeit von δ1, δ2, ...δM interpoliert werden,
**dass** die Signalleistung des optischen Signals aus dem Hub der sinusförmigen Kurve ermittelt wird, wodurch für die optischen Signale (S) das Signal-Rausch-Verhältnis (OSNR) abgeleitet wird.

7. Verfahren nach einem der vorhergehenden Ansprüche,
**dadurch gekennzeichnet,**
**dass** zur Aufnahme der Leistungswerte eines optischen Signals (S) eine Auflösungszelle mit einer Bandbreite gleich oder kleiner als die spektrale Breite eines Kanals eines WDM-Signals gewählt wird.

8. Vorrichtung zur Ermittlung des Signal-Rausch-Verhältnisses (OSNR) von beliebig polarisierten optischen Signalen (S) unterschiedlicher Wellenlänge, die zu einem WDM-Signal zusammengefasst sind,
nach einem "Polarisation-Nulling-Verfahren",
bei dem nach Durchgang durch einen ersten und einen zweiten polarisationsoptischen Phasensteller (E1, E2) das optische Signal (S) in einen linearen Polarisator (POL) mit nachgeschaltetem optischen Spektrumanalysator (OSA) eingespeist ist,

**dadurch gekennzeichnet,**

**dass** dem optischen Spektrumanalysator (OSA) eine Speichereinheit (SE) zur Tabellierung von den am optischen Spektrumanalysator (OSA) gemessenen Leistungswerten der Spektren bei unterschiedlichen Einstellungen der Phasensteller (E1, E2) angefügt ist, und

**dass** dem optischen Spektrumanalysator (OSA) eine Ermittlungseinheit (EE) zur Berechnung des Signal-Rausch-Verhältnisses (OSNR) durch Interpolation und Hubsuche der am optischen Spektrumanalysator (OSA) aufgenommenen Leistungswerte angeschlossen ist.

9. Vorrichtung nach Anspruch 8,
   **dadurch gekennzeichnet,**
   **dass** der erste polarisationsoptische Phasensteller (E1) eine λ/4-Platte und der zweite polarisationsoptische Phasensteller (E2) eine λ/2-Platte ist.

**Claims**

1. Method for determining the signal-to-noise ratio (OSNR) of arbitrarily polarised optical signals (S) of different wavelengths which are combined to form a WDM signal, according to a polarisation nulling method,
   with
   power spectra of the WDM signal for a first defined setting of a first polarisation-optical phase controller (E1) and for N settings of a second polarisation-optical phase controller (E2) being recorded and stored,
   from the power spectra a maximum deviation $A_1$ is determined for the optical signals (S) and stored, **characterised in that** the power spectra of the WDM signal for M-1 new settings of the first phase controller (E1) and for N settings in each case of the second phase controller (E2) are then recorded and stored,
   from these stored power spectra for each setting of the first phase controller (E1) the maximum deviations $A_m$ with m = 2, 3 ... M of the signals are determined and stored, and on the basis of all deviations $A_1, A_2, ... A_M$ the signal-to-noise ratio (OSNR) is calculated for the optical signals (S).

2. Method according to claim 1,
   **characterised in that**
   the deviation $A_m$ with m=1, 2 ...M of an optical signal (S) is determined by means of an interpolation.

3. Method according to claim 1 or 2,
   **characterised in that**
   the signal power of the optical signal (S) is determined by means of interpolation of the squared deviations.

4. Method according to claim 1, 2 or 3,
   **characterised in that**
   by measuring the power at the input of the polarisation controller a sum of the signal and noise power is determined from which a noise power is determined by subtracting the determined signal power of the optical signal (S).

5. Method according to one of the preceding claims,
   **characterised in that**
   the phase shifts between the components of the electrical field vector of an optical signal (S) and the polariser (POL) are performed by means of phase retarder plates as polarisation-optical phase controllers, and the phase retarder plate (E1) can be set using the rotation angles δ1, δ2, ..., δM and the phase retarder plate (E2) can be set using the rotation angles θ1, θ2, ..., θN.

6. Method according to claim 5,
   **characterised in that**
   the settings of the first and second phase retarder plates (E1) and (E2) are implemented in such a way that a first phase shift is set for a first rotation angle δ1 of (E1) and a plurality N of angles θ1, θ2, ..., θN are set for (E2) from which a set of N power values is recorded,
   from these power values a first sinusoidal interpolation curve is determined whose deviation $A_1$ is stored in a table, the settings of the angles θ1, θ2, ..., θN are repeated for further rotation angles δ2, ... , δM with m>1 for recording further power values from which further deviations $A_2, ... A_M$ are stored whose values are squared and interpolated with another sinusoidal curve as a function of δ1, δ2, ... , δM, the signal power of the optical signal is determined from the deviation of the sinusoidal curve, by means of which the signal-to-noise ratio (OSNR) is derived for the optical signals (S).

7. Method according to one of the preceding claims,
**characterised in that**
to record the power values of an optical signal (S) a resolution cell with a bandwidth equal to or less than the spectral width of a channel of a WDM signal is selected.

8. Device for determining the signal-to-noise ratio (OSNR) of arbitrarily polarised optical signals (S) of different wavelengths which are combined to form a WDM signal, according to a polarisation nulling method,
wherein after passing through a first and a second polarisation-optical phase controller (E1, E2) the optical signal (S) is injected into a linear polariser (POL) with following optical spectrum analyser (OSA),
**characterised in that**
there is added to the optical spectrum analyser (OSA) a memory unit (SE) for tabulating the power values of the spectra measured at the optical spectrum analyser (OSA) for different settings of the phase controllers (E1, E2), and there is connected to the optical spectrum analyser (OSA) a determination unit (EE) for calculating the signal-to-noise ratio (OSNR) by interpolation and deviation searching of the power values recorded at the optical spectrum analyser (OSA).

9. Device according to claim 8,
**characterised in that**
the first polarisation-optical phase controller (E1) is a $\lambda/4$ plate and the second polarisation-optical phase controller (E2) is a $\lambda/2$ plate.

**Revendications**

1. Procédé pour déterminer le rapport signal-bruit (OSNR) de signaux optiques (S) polarisés de manière quelconque, de différente longueur d'onde, qui sont regroupés en un signal WDM,
selon un procédé de « Polarization Nulling »,
des spectres de puissance du signal WDM étant enregistrés et mémorisés pour un premier réglage déterminé d'un premier moyen d'ajustement de phase (E1) à polarisation optique et pour N réglages d'un deuxième moyen d'ajustement de phase (E2) à polarisation optique,
une déviation maximale $A_1$ étant déterminée et mémorisée pour les signaux optiques (S) à partir des spectres de puissance,
**caractérisé en ce**
**qu'**ensuite les spectres de puissance du signal WDM sont enregistrés et mémorisés pour M-1 nouveaux réglages du premier moyen d'ajustement de phase (E1) et pour respectivement N réglages du deuxième moyen d'ajustement de phase (E2),
en ce que les déviations maximales $A_m$, où m = 2, 3, ..., M, des signaux sont déterminées et mémorisées pour chaque réglage du premier moyen d'ajustement de phase (E1), à partir de ces spectres de puissance mémorisés, et en ce qu' à l'aide de toutes les déviations $A_1$, $A_2$, ..., $A_M$ pour les signaux optiques (S), le rapport signal-bruit (OSNR) est calculé.

2. Procédé selon la revendication 1,
**caractérisé en ce**
**que** la déviation $A_m$, où m = 1, 2, ..., M, d'un signal optique (S) est déterminée au moyen d'une interpolation.

3. Procédé selon la revendication 1 ou 2,
**caractérisé en ce**
**que** la puissance de signal du signal optique (S) est déterminée au moyen d'une interpolation des déviations élevées au carré.

4. Procédé selon la revendication 1, 2 ou 3,
**caractérisé en ce**
**qu'**une somme de la puissance de signal et de la puissance de bruit est déterminée au moyen d'une mesure de puissance à l'entrée de l'actionneur de polarisation, à partir de laquelle somme une puissance de bruit est déterminée par soustraction de la puissance de signal déterminée du signal optique (S).

**5.** Procédé selon l'une quelconque des revendications précédentes,
**caractérisé en ce**
**que** les décalages de phase entre les composantes du vecteur de champ électrique d'un signal optique (S) et le polariseur (POL) sont exécutés au moyen de lames de retards de phase comme moyens d'ajustement de phase à polarisation optique et en ce que la lame de retard de phase (E1) est réglable au moyen des angles de rotation δ1, δ2, ..., δM et en ce que la lame de retard de phase (E2) est réglable au moyen des angles de rotation θ1, θ2, ..., θN.

**6.** Procédé selon la revendication 5,
**caractérisé en ce**
**que** les réglages des premières et des deuxièmes lames de retard de phase (E1) et (E2) sont réalisés de telle manière qu'un premier décalage de phase est réglé pour un premier angle de rotation δ1 de (E1) et qu'une pluralité N d'angles θ1, θ2, ..., θN est réglée pour (E2), à partir desquels un jeu de N valeurs de puissance est enregistré, **qu'**une première courbe d'interpolation de forme sinusoïdale est déterminée à partir de ces valeurs de puissance, dont la déviation $A_1$ est mémorisée dans un tableau,
**que** les réglages des angles θ1, θ2, ..., θN sont répétés pour d'autres angles de rotation δ2, ..., δM, avec m>1, pour l'enregistrement d'autres valeurs de puissance, à partir desquels d'autres déviations $A_2$, ..., $A_M$ sont mémorisées, dont les valeurs sont élevées au carré et interpolées au moyen d'une autre courbe sinusoïdale en fonction de δ1, δ2, ..., δM,
**que** la puissance de signal du signal optique est déterminée à partir de la déviation de la courbe sinusoïdale, ce qui permet de déduire le rapport signal-bruit (OSNR) pour les signaux optiques (S).

**7.** Procédé selon l'une quelconque des revendications précédentes,
**caractérisé en ce**
**qu'**une cellule de résolution ayant une largeur de bande égale ou inférieure à la largeur spectrale d'un canal d'un signal WDM est sélectionnée pour l'enregistrement des valeurs de puissance d'un signal optique (S).

**8.** Dispositif pour déterminer le rapport signal-bruit (OSNR) de signaux optiques (S) polarisés de manière quelconque, de différentes longueurs d'onde, qui sont regroupés en un signal WDM,
selon un procédé « polarization nulling »
dans lequel, après le passage à travers un premier et un deuxième moyen d'ajustement de phase (E1, E2) à polarisation optique, le signal optique (S) est alimenté dans un polariseur linéaire (POL) doté d'un analyseur spectral optique (OSA) installé en aval,
**caractérisé en ce**
**qu'**une unité de mémorisation (SE) pour tabuler des valeurs de puissance des spectres, mesurées sur l'analyseur spectral optique (OSA) lors de différents réglages des moyens d'ajustement de phase (E1, E2), est ajoutée à l'analyseur spectral optique (OSA), et
en ce qu'une unité de détermination (EE) est raccordée à l'analyseur spectral optique (OSA) pour le calcul du rapport signal-bruit (OSNR) par interpolation et par recherche de déviations des valeurs de puissance enregistrées sur l'analyseur spectral optique (OSA).

**9.** Dispositif selon la revendication 8,
**caractérisé en ce**
**que** le premier moyen d'ajustement de phase (E1) à polarisation optique est une lame quart d'onde et en ce que le deuxième moyen d'ajustement de phase (E2) à polarisation optique est une lame demi-onde.

EP 1 532 756 B1

# FIG 1

11